# EUROPÄISCHE PATENTSCHRIFT

(11) **EP 2 005 196 B1**
(45) Veröffentlichungstag und Bekanntmachung des Hinweises auf die Patenterteilung: **07.09.2011**
(21) Anmeldenummer: 07727993.3
(22) Anmeldetag: 11.04.2007
(51) Int. Cl.: G01N 35/10, B01F 11/00

(54) **VERFAHREN ZUM DOSIEREN UND MISCHEN**
METHOD FOR METERING AND MIXING
PROCEDE DE DOSAGE ET DE MELANGE

(30) Priorität: 11.04.2006 DE 102006017360
(43) Veröffentlichungstag der Anmeldung: 24.12.2008
(73) Patentinhaber: DiaSys Diagnostic Systems GmbH, 65558 Holzheim (DE)
(72) Erfinder: GORKA, Günther, 65520 Bad Camberg (DE)
(74) Vertreter: Weber, Roland
(86) Internationale Anmeldenummer: PCT/EP2007/053525
(87) Internationale Veröffentlichungsnummer: WO 2007/116083

(56) Entgegenhaltungen:
- EP-A- 1 138 372
- EP-A- 1 498 736
- WO-A-93/25309
- DE-A1- 3 115 568
- US-A- 5 133 392

## Beschreibung

Die vorliegende Erfindung betrifft ein Verfahren zum automatischen Dosieren und Mischen von Flüssigkeiten in einem Probengefäß mittels einer Dosiernadel.

Bei der automatischen oder halbautomatischen Durchführung von chemischen Reaktionen, insbesondere Analyseverfahren, ist es erforderlich, daß mehrere Flüssigkeiten wie Proben und Reagenzien homogen vermischt werden. Das am häufigsten verwendete Verfahren besteht darin, daß nach Zugabe aller Flüssigkeiten eine Mischvorrichtung in das Reaktionsgefäß einfährt und die Flüssigkeiten durch Verrühren vermischt. Dieses Verfahren birgt den Nachteil, daß eine zusätzliche Komponente vorhanden ist, die programmiert werden muß, und daß die Kontaminationsgefahr durch ein zusätzliches Instrument, das mit den Flüssigkeiten in Berührung kommt, steigt.

Die JP 07239334 beschreibt ein weiteres Verfahren zum Mischen von Flüssigkeiten, bei dem eine kleine Menge einer ersten Probenlösung in das Probengefäß pipettiert wird und anschließend mit einer weiteren Pipette eine große Menge einer verdünnenden Lösung zugegeben wird. Dieses Verfahren eignet sich nur, wenn zwei Flüssigkeiten mit sehr unterschiedlichen Volumina gemischt werden sollen. Im übrigen kann durch dieses Verfahren nicht für jede Art von Flüssigkeiten eine homogene Mischung erzielt werden.

Ein weiteres Verfahren zum Mischen von Flüssigkeiten mit Hilfe einer Pipette ist in der JP 62184357 beschrieben. Dabei wird eine Pipette oder Dosiernadel mehrfach in die Flüssigkeit in einem Probengefäß eingetaucht, die Flüssigkeit aufgesaugt, danach die Pipette angehoben, so daß sich deren Spitze oberhalb der Flüssigkeitsoberfläche befindet und die Flüssigkeit wieder ausgestoßen. Um eine homogene Mischung zu erhalten, muß dieses Verfahren häufig wiederholt werden.

Ausgehend von diesem Stand der Technik liegt der vorliegenden Erfindung die Aufgabe zugrunde, ein Verfahren zum automatischen Dosieren und Mischen von Flüssigkeiten zur Verfügung zu stellen, welches die Flüssigkeiten möglichst schnell und in wenigen Schritten besonders effektiv mischt, das einfach durchzuführen und preisgünstig ist und keine zusätzliche Komponente benötigt.

Diese Aufgabe wird durch ein Verfahren der eingangs genannten Art gelöst, das die folgenden Stufen hat:
a) Abgeben eines Volumens einer Flüssigkeit oder mehrere Volumina mehrerer Flüssigkeiten aus einer Dosiernadel in ein Probengefäß, wobei die Abgabe der Flüssigkeit oder Flüssigkeiten aus der Dosiernadel beginnt, wenn sich die Abgabeöffnung der Dosiernadel bei einer Startposition (S) befindet, die Abgabe fortgesetzt wird, während die Dosiernadel in vertikaler Richtung abwärts in Richtung einer Endposition (E) verfahren wird, und die Abgabe endet, wenn sich die Abgabeöffnung der Dosiernadel bei der Endposition (E) befindet,
   wobei sich die Startposition in vertikaler Richtung in einem Abstand vom Boden des Probengefäßes, der der maximalen Füllhöhe des Probengefäßes nach vollständiger Flüssigkeitsabgabe in dieser Stufe entspricht, oder darüber oder maximal 10% darunter, bezogen auf den Abstand vom Boden des Probengefäßes bis zu der maximalen Füllhöhe des Probengefäßes nach vollständiger Flüssigkeitsabgabe in dieser Stufe, befindet, und
   wobei sich die Endposition (E) in vertikaler Richtung unterhalb der Startposition (S) und in einem Abstand zum Boden des Probengefäßes befindet;
b) Aufsaugen wenigstens eines Teiles des in dem Probengefäß vorhandenen Flüssigkeitsvolumens mit der Dosiernadel, während sich die Abgabeöffnung der Dosiernadel in der Endposition (E) befindet;
c) Verfahren der Dosiernadel in vertikaler Richtung, bis sich die Abgabeöffnung bei der Startposition (S) befindet;
d) Abgeben des aufgesaugten Flüssigkeitsvolumens aus der Dosiernadel, wobei die Abgabe beginnt, wenn sich die Abgabeöffnung der Dosiernadel bei der Startposition (S) befindet, die Abgabe fortgesetzt wird, während die Dosiernadel in vertikaler Richtung abwärts in Richtung der Endposition (E) verfahren wird, und die Abgabe endet, wenn sich die Abgabeöffnung der Dosiernadel bei der Endposition (E) befindet.

Bevorzugt ist ein Verfahren, bei welchem vor Stufe a) ein Volumen einer Flüssigkeit oder mehrere Volumina mehrerer Flüssigkeiten aus einer Dosiernadel in das Probengefäß abgegeben werden. Dadurch können beispielsweise ein oder mehrere Proben, Reagenzien oder Puffer in verschiedenen Probengefäßen vorgelegt werden und der eigentliche Mischvorgang mit der Zugabe einer weiteren Flüssigkeit durchgeführt werden.

Weiterhin bevorzugt ist ein Verfahren, bei welchem die Stufen a) bis d) mit einer oder mehreren Flüssigkeiten wiederholt werden. Vielfach werden chemische Reaktionen durch die Zugabe einer bestimmten Substanz gesteuert. Insbesondere bei analytischen Reaktionen ist es daher nötig, diese Substanz möglichst schnell mit den übrigen Flüssigkeiten zu mischen, um eine einheitliche Reaktion zu gewährleisten. Durch das erfindungsgemäße Verfahren kann eine schnelle homogene Mischung aller Flüssigkeiten erreicht werden.

Erfindungsgemäß bevorzugt ist auch ein Verfahren, bei welchem die Stufen b) bis d) ein oder mehrere weitere Male wiederholt werden. Manche Flüssigkeiten können aufgrund ihrer physikalischen Eigenschaften wie der Viskosität nur sehr langsam pipettiert werden und mischen sich unter Umständen sehr schlecht mit anderen Flüssigkeiten, daher ist es sinnvoll, wenn die Stufen des Aufsaugens und des Wiederabgebens der Flüssigkeit in das Probengefäß wiederholt werden. Damit wird auch bei Flüssigkeiten mit hohen Viskositäten, stark unterschiedlichen Viskositäten oder stark unterschiedlichen Dichten eine homogene Mischung erreicht.

Besonders bevorzugt ist ein Verfahren, bei welchem sich die Startposition (S) in vertikaler Richtung zwischen 0,5% und 50%, bevorzugt zwischen 0,5% und 20%, bezogen auf den Abstand vom Boden des Probengefäßes bis zu der maximalen Füllhöhe des Probengefäßes nach vollständiger Flüssigkeitsabgabe in der jeweiligen Stufe, oberhalb der maximalen Füllhöhe nach vollständiger Flüssigkeitsabgabe in der jeweiligen Stufe befindet. Die Startposition, in welcher sich die Dosiernadel bei Beginn der Abgabe der Flüssigkeit befindet, soll sich oberhalb der Füllhöhe des Probengefäßes nach vollständiger Flüssigkeitsabgabe befinden, da sich mehrere sukzessiv zugegebene Flüssigkeiten oder eine bereits vorgelegte Flüssigkeit mit den Flüssigkeiten, die zugegeben werden, bereits durch die Verwirbelung, die beim Auftreffen der Flüssigkeit auf den Flüssigkeitsspiegel entstehen, vermischen. Ist der Abstand zu gering, so finden nicht ausreichend Verwirbelungen statt, ist er zu groß, so besteht die Gefahr, daß ein Teil der zugegebenen Flüssigkeit am Rand des Probengefäßes verbleibt, bzw. es zu Spritzern beim Auftreffen der Flüssigkeit auf bereits vorhandene Flüssigkeit kommt, was zu einem Verlust von Flüssigkeiten und damit zu Ungenauigkeiten führen würde.

Weiterhin bevorzugt ist ein Verfahren, bei welchem sich die Endposition (E) in vertikaler Richtung in einem Abstand zwischen 0,5% und 20%, bevorzugt zwischen 0,5% und 10%, besonders bevorzugt zwischen 0,5% und 5%, bezogen auf den Abstand vom Boden des Probengefäßes bis zu der maximalen Füllhöhe des Probengefäßes nach vollständiger Flüssigkeitsabgabe in der jeweiligen Stufe, oberhalb des Bodens des Probengefäßes befindet. Die Endposition der Abgabeöffnung der Dosiernadel soll sich deutlich unterhalb der maximalen Füllhöhe des Probengefäßes befinden, so daß der größte Teil der Abgabe unterhalb des Flüssigkeitsspiegels erfolgt und damit eine Durchmischung der Flüssigkeiten in vertikaler Richtung gewährleistet ist.

Andererseits ist es nötig, daß zwischen der Abgabeöffnung der Dosiernadel und dem Boden des Probengefäßes ein Mindestabstand eingehalten wird, so daß in der Endposition ein Aufsaugen von Flüssigkeit ermöglicht wird.

Bevorzugt ist weiterhin, daß bei einem erfindungsgemäßen Verfahren mehrere Flüssigkeitsvolumina in der Dosiernadel durch Luftblasen getrennt werden. Diese Trennluftblasen verhindern ein Durchmischen der Flüssigkeit in der Dosiernadel, wodurch eine ungesteuerte Reaktion und eine Kontamination der Flüssigkeiten verhindert wird. Vorzugsweise werden die Trennluftblasen oberhalb des Flüssigkeitsspiegels aus der Dosiernadel abgegeben, so daß nach Abgabe der Flüssigkeit keine Luftblasen in dem Flüssigkeitsvolumen in dem Probengefäß verbleiben, die sonst eventuelle Messungen stören könnten.

Besonders bevorzugt ist ein Verfahren, bei welchem vor Stufe b) die Dosiernadel in vertikaler Richtung aufwärts verfahren wird, bis sich die Abgabeöffnung über der Flüssigkeitsoberfläche befindet, dann eine Trennluftblase angesaugt und anschließend die Dosiernadel wieder in die Endposition (E) verfahren wird. Um ein exaktes Zugabevolumen zu erreichen, kann sich in der Dosiernadel mehr Flüssigkeit befinden, als zugegeben werden soll. Die Zugabe wird dann gestoppt, wenn das gewünschte Volumen aus der Dosiernadel in das Probengefäß abgegeben wurde. In der Dosiernadel verbleibt damit ein Teil einer Flüssigkeit, die nicht mit den Flüssigkeiten in dem Probengefäß vermischt werden soll. Durch das Ansaugen einer Trennluftblase nach Stufe a) wird verhindert, daß die sich in dem Probengefäß bereits befindenden zu mischenden oder bereits gemischte Flüssigkeiten in den darauffolgenden Stufen mit der Flüssigkeit, die in der Dosiernadel verbleibt, vermischen.

Bevorzugt ist auch ein Verfahren, bei welchem die Geschwindigkeit, mit der die Dosiernadel in das Probengefäß hineinverfahren wird, zu der Geschwindigkeit der Abgabe der Flüssigkeit oder Flüssigkeiten proportional ist. Die Startposition (S) und die Endposition (E) stellen gleichzeitig den Start- und Endpunkt einer Bewegung sowie den Start- und Endpunkt der Abgabe der Flüssigkeit dar. Sind die beiden Geschwindigkeiten zueinander proportional, wird die Berechnung der Geschwindigkeiten vereinfacht.

Weiterhin bevorzugt ist ein Verfahren, bei welchem die Geschwindigkeit, mit der die Dosiernadel in das Probengefäß hineinverfahren wird und/oder die Geschwindigkeit der Abgabe der Flüssigkeit oder Flüssigkeiten aus der Dosiernadel gleichbleibend ist. Gleichbleibende Geschwindigkeiten, sowohl der Abgabe also auch der Geschwindigkeit, mit der die Dosiernadel in das Probengefäß eingefahren wird, gewährleisten eine gleichmäßige Verteilung der Flüssigkeiten die abgegeben werden, insbesondere, wenn die Dosiernadel sich unterhalb des Flüssigkeitsspiegels befindet. Im übrigen sind bei der Automatisierung gleichbleibende Geschwindigkeiten auch leichter zu verwirklichen.

Weiterhin bevorzugt ist ein Verfahren, bei welchem die Geschwindigkeit der Abgabe der Flüssigkeit oder Flüssigkeiten aus der Dosiernadel zwischen 0,1 und 2 ml/s, bevorzugt zwischen 0,2 und 1 ml/s beträgt. Für Gesamtvolumina von typischerweise bis zu 1 ml sind dies geeignete Abgabegeschwindigkeiten, damit eine homogene Mischung in möglichst wenigen Schritten erreicht wird. Höhere Geschwindigkeiten können zu einem Herausspritzen von Flüssigkeit und damit zu Volumenfehlern bei der Flüssigkeitsabgabe führen, wodurch keine einheitlichen Reaktionsbedingungen gewährleistet wären. Geringere Geschwindigkeiten würden bei der Abgabe in die Flüssigkeit nicht für ausreichend Verwirbelung sorgen, so daß daraus eine weniger gute Vermischung resultiert und daher zusätzliche Wiederholungen der Stufen b) bis d) benötigt würden, was das Verfahren zusätzlich verlangsamte.

Besonders bevorzugt ist ein Verfahren, bei welchem in Stufe b) 50 bis 100 Vol.-% des in dem Probengefäß vorhandenen Flüssigkeitsvolumens, bevorzugt 70 bis 95 Vol.-%, besonders bevorzugt 90 bis 95 Vol.-%, aufgesaugt werden. Werden weniger als 50 Vol.-% des Flüssigkeitsvolumens aufgesaugt, so erhöht sich die Zahl der benötigten Mischvorgänge bis zum Erreichen einer homogenen Mischung. Das Aufsaugen von mehr als 95 Vol.-% ist technisch nicht sinnvoll, da die Wahrscheinlichkeit, daß dabei Luft mitaufgesaugt würde, sehr groß ist und dadurch keine bessere Mischung gewährleistet wäre.

Besonders bevorzugt ist auch, daß die Dosiernadel zum Temperieren der Flüssigkeiten eingesetzt wird. Da beim Aufsaugen und Abgeben von Flüssigkeiten eine große Flüssigkeitsoberfläche mit der Dosiernadel in Berührung kommt, ist es sinnvoll, die Dosiernadel zu beheizen und dadurch eine schnelle Vortemperierung der Flüssigkeit zu erreichen. Dies reduziert auch die Anforderungen an weiteres technisches Gerät, das dem Temperieren der Flüssigkeiten dient, wodurch das Verfahren preisgünstiger wird.

Weiterhin bevorzugt ist ein Verfahren, bei welchem eine Dosiernadel verwendet wird, deren Innendurchmesser an der Abgabeöffnung kleiner als 1 mm ist und bevorzugt zwischen 0,5 und 0,8 mm beträgt. Für Gesamtvolumina von bis zu 1 ml sind dies geeignete Größen für die Abgabeöffnung der Dosiernadel. Kleinere Öffnungen würden das optimale Durchtreten der Flüssigkeiten verhindern. Größerer Öffnungen würden die Wirbelbildung an der Kante der Abgabeöffnung reduzieren und damit zu einer schlechteren Vermischung führen.

Geeignet ist auch ein Verfahren, bei welchem eine Dosiernadel verwendet wird, deren Spitze im wesentlichen abgeschrägt ist. Bei der Abgabe von Flüssigkeiten aus einer Dosiernadel mit abgeschrägter Spitze in bereits vorgelegte Flüssigkeiten werden Wirbel erzeugt, die die Mischwirkung des Verfahrens unterstützen.

Geeignet ist auch ein Verfahren, bei welchem eine Dosiernadel mit einer geschlossenen Spitze verwendet wird, bei der sich seitlich mehrere Abgabeöffnungen befinden. Durch das Anbringen von seitlichen Abgabeöffnungen wird die Flüssigkeit zur Seite abgegeben und erzeugt dort zusätzliche Verwirbelungen. Auch dies unterstützt die Mischwirkung des Verfahrens.

Besonders bevorzugt ist ein Verfahren, bei welchem als Probengefäß eine Meßküvette verwendet wird. Insbesondere bei analytischen Testreaktionen ist es sinnvoll, die Mischung der Flüssigkeiten direkt in der Meßküvette durchzuführen, da dadurch ein weiterer Automatisierungsschritt und eine weitere Flüssigkeitsübertragung vermieden werden. Dies führt einerseits zu Kostenersparnis und reduziert andererseits das Risiko einer Kontamination. Das Verwenden einer Meßküvette als Probengefäß ist bei diesem Mischverfahren auch deshalb möglich, weil eine Bildung bzw. ein Verbleiben von Luftblasen innerhalb der Flüssigkeit verhindert wird und weil die Dosiernadel an keiner Stelle das Probengefäß berührt und dadurch die Meßküvette nicht mechanisch beansprucht wird.

Weitere Vorteile und Merkmale des erfindungsgemäßen Verfahrens werden deutlich anhand der folgenden Beschreibung der Figuren.
- Figur 1: zeigt eine schematische Darstellung des Verfahrens zum Dosieren und Mischen von Flüssigkeiten, bestehend aus den Stufen:
a) a') Abgeben eines Flüssigkeitsvolumens;
b) Aufsaugen eines Teils des in dem Probengefäß vorhandenen Flüssig- keitsvolumens;
c) Verfahren der Dosiernadel in vertikaler Richtung zur Startposition (S) und
d) d') Abgeben des aufgesaugten Flüssigkeitsvolumens.
- Figur 2: zeigt eine schematische Darstellung des Ansaugens einer Trennluftblase.

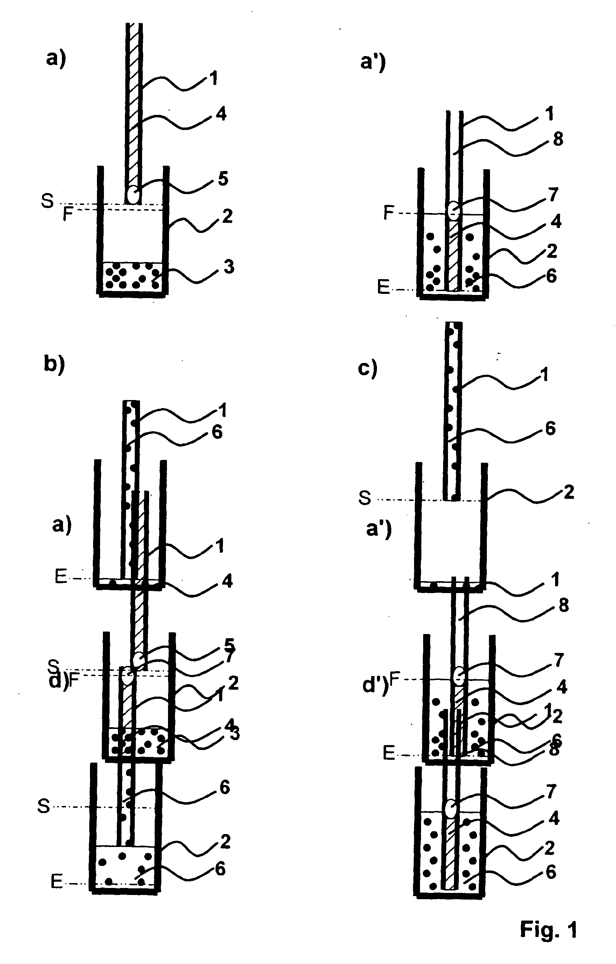

In Figur 1 a) ist ein Probengefäß 2 mit einer Flüssigkeit 3 gezeigt, in welches mit Hilfe einer Dosiernadel 1 eine weitere Flüssigkeit 4 zugegeben werden soll. Die Abgabeöffnung der Dosiernadel 1 befindet sich bei einer Startposition S. Die Linie F bezeichnet die maximale Füllhöhe F des Probengefäßes nach vollständiger Flüssigkeitsabgabe in dieser Stufe. Die Startposition S befindet sich oberhalb der maximalen Füllhöhe F. Die Flüssigkeit 4 ist von der Umgebung nach außen durch eine Trennluftblase 5 abgetrennt. Diese wird bei Beginn der Zugabe, d. h. während die Dosiernadel 1 in das Probengefäß 2 verfahren wird, an die Luft abgegeben und verbleibt somit nicht in der sich in dem Probengefäß befindlichen Flüssigkeit. Das Verfahren der Dosiernadel 1 in das Probengefäß 2 hinein kann sowohl durch eine Bewegung der Dosiernadel als auch durch eine Bewegung des Probengefäßes oder eine Kombination dieser Bewegungen durchgeführt werden.

Figur 1 a') zeigt die Dosiernadel 1 in dem Probengefäß 2 bei Ende der Abgabe der Flüssigkeit 4. Die Abgabeöffnung der Dosiernadel befindet sich bei der Endposition E oberhalb des Bodens des Probengefäßes. In dem Probengefäß 2 befindet sich nun eine Mischung 6 aus den beiden Flüssigkeiten 3 und 4. Dabei stellen die Punkte die Verteilung der Flüssigkeit 3 innerhalb der Mischung 6 dar. In dieser Ausführungsform wurde die Flüssigkeit 4 nicht vollständig aus der Dosiernadel 1 in das Probengefäß 2 abgegeben. Aus Gründen der Genauigkeit der Abgabe verbleibt ein Rest der Flüssigkeit 4 in der Dosiernadel 1, wobei dieser Rest durch eine Trennluftblase 7 von der Systemflüssigkeit 8, die sich oberhalb dieser Luftblase 7 in der Dosiernadel 1 befindet, abgegrenzt wird.

Obwohl durch die Abgabe der Flüssigkeit 4 unter gleichzeitigem Einfahren der Dosiernadel 1 in das Probengefäß 2 in den meisten Anwendungen bereits eine gute Vermischung der Flüssigkeiten 3 und 4 erzielt wird, können je nach Art der Flüssigkeiten noch Konzentrationsunterschiede im Probengefäß 2 vorherrschen. Aus diesem Grund wird ein Teil der Flüssigkeit in dem Probengefäß in einer weiteren Stufe aufgesaugt und erneut abgegeben. Figur 1 b) zeigt die Dosiernadel 1 nach Aufsaugen eines Teils des in dem Probengefäß vorhandenen Flüssigkeitsvolumens des Flüssigkeitsgemisches 6. Die Abgabeöffnung der Dosiernadel befindet sich dabei in der Endposition E.

Nach dem Aufsaugen wird die Dosiernadel wieder aus dem Probengefäß herausgefahren, bis sich die Abgabeöffnung bei der Startposition S befindet. Dies ist in Figur 1 c) gezeigt. Ein großer Anteil des Flüssigkeitsvolumens der Mischung 6 befindet sich in der Dosiernadel 1 und kann nun erneut in das Probengefäß 2 abgegeben werden, während de Dosiernadel 1 in das Probengefäß 2 verfahren wird.

Figur 1 d) zeigt die Dosiernadel in dem Probengefäß während der erneuten Flüssigkeitsabgabe. Dabei fährt die Dosiernadel 1 in das Probengefäß 2 ein, bis sich die Abgabeöffnung bei der Endposition E befindet. Gleichzeitig wird die Flüssigkeit aus der Dosiernadel abgegeben.

In Figur 1 d') ist das Ende des Mischvorgangs gezeigt. Dabei befinden sich in dem Probengefäß 2 das Flüssigkeitsgemisch 6, das nunmehr eine sehr homogene Mischung der Lösungen 4 und 3 ist, und in der Dosiernadel 1 ein verbleibender Rest der Flüssigkeit 4 und eine Trennluftblase 7, die diese von der Systemflüssigkeit 8 in der Nadel 1 abtrennt.

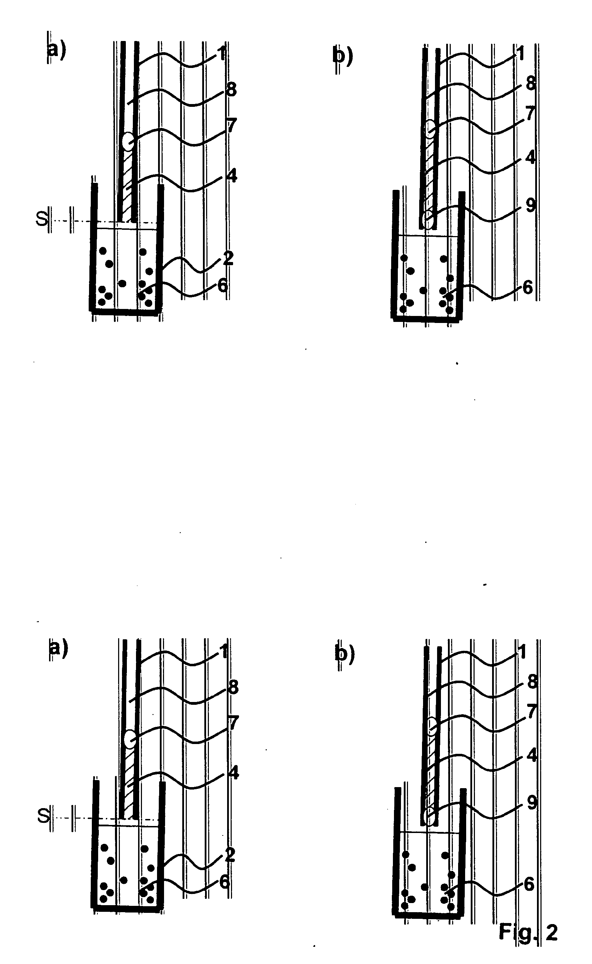

Figur 2 zeigt die Aufnahme einer Trennluftblase 9 in die Dosiernadel 1 vor der Stufe b) in Figur 1 b), um ein Vermischen der verbleibenden Flüssigkeit 4 in der Dosiernadel 1 mit der Flüssigkeitsmischung 6 zu verhindern.

Figur 2 a) zeigt dabei, daß nach der Zugabe der Flüssigkeit 4 zu der Flüssigkeit 3 in dem Probengefäß 2, die Dosiernadel mit der Abgabeöffnung in die Startposition S verfahren wird. Dabei befindet sich die Abgabeöffnung der Dosiernadel 1 oberhalb der maximalen Füllhöhe des Probengefäßes nach vollständiger Flüssigkeitsabgabe in dieser Stufe und damit oberhalb des Flüssigkeitsspiegels.

Durch Ansaugen von Luft in Figur 2 b) entsteht in der Dosiernadel 1 eine Luftblase 9, die die in der Dosiernadel befindliche Flüssigkeit 4 beim nachfolgenden Ansaugen des Flüssigkeitsgemisches 6 abtrennt. Die Trennluftblase 9 wird an dieser Stelle angesaugt, um in der nachfolgenden Stufe b) (Figur 1 b)) eine Durchmischung des in der Dosiernadel verbleibenden Rests der Flüssigkeit 4 mit dem zu mischenden Flüssigkeitsgemisch 6 zu verhindern. Weiterhin ist in der Dosiernadel die Luftblase 7 enthalten, die die Flüssigkeit 4 von der Systemflüssigkeit 8 in der Nadel trennt.

Für Zwecke der ursprünglichen Offenbarung wird darauf hingewiesen, daß sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben werden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

## Patentansprüche

1. Verfahren zum automatischen Dosieren und Mischen von Flüssigkeiten in einem Probengefäß mittels einer Dosiernadel mit den folgenden Stufen:
a) Abgeben eines Volumens einer Flüssigkeit oder mehrerer Volumina mehrerer Flüssigkeiten aus einer Dosiernadel in ein Probengefäß, wobei die Abgabe der Flüssigkeit oder Flüssigkeiten aus der Dosiernadel beginnt, wenn sich die Abgabeöffnung der Dosiernadel bei einer Startposition (S) befindet, die Abgabe fortgesetzt wird, während die Dosiernadel in vertikaler Richtung abwärts in Richtung einer Endposition (E) verfahren wird, und die Abgabe endet, wenn sich die Abgabeöffnung der Dosiernadel bei der Endposition (E) befindet,
wobei sich die Startposition in vertikaler Richtung in einem Abstand vom Boden des Probengefäßes, der der maximalen Füllhöhe des Probengefäßes nach vollständiger Flüssigkeitsabgabe in dieser Stufe entspricht, oder darüber oder maximal 10% darunter, bezogen auf den Abstand vom Boden des Probengefäßes bis zu der maximalen Füllhöhe des Probengefäßes nach vollständiger Flüssigkeitsabgabe in dieser Stufe, befindet und
wobei sich die Endposition (E) in vertikaler Richtung unterhalb der Startposition (S) und in einem Abstand zum Boden des Probengefäßes befindet;
b) Aufsaugen wenigstens eines Teils des in dem Probengefäß vorhandenen Flüssigkeitsvolumens mit der Dosiernadel, während sich die Abgabeöffnung der Dosiernadel in der Endposition (E) befindet;
c) Verfahren der Dosiernadel in vertikaler Richtung, bis sich die Abgabeöffnung bei der Startposition (S) befindet;
d) Abgeben des aufgesaugten Flüssigkeitsvolumens aus der Dosiernadel, wobei die Abgabe beginnt, wenn sich die Abgabeöffnung der Dosiernadel bei der Startposition (S) befindet, die Abgabe fortgesetzt wird, während die Dosiernadel in vertikaler Richtung abwärts in Richtung der Endposition (E) verfahren wird, und die Abgabe endet, wenn sich die Abgabeöffnung der Dosiernadel bei der Endposition (E) befindet.

2. Verfahren nach Anspruch 1, wobei vor Stufe a) ein Volumen einer Flüssigkeit oder mehrere Volumina mehrerer Flüssigkeiten aus einer Dosiernadel in das Probengefäß abgegeben werden.

3. Verfahren nach Anspruch 1 oder 2, wobei die Stufen a) bis d) mit einer oder mehreren weiteren Flüssigkeiten wiederholt werden.

4. Verfahren nach einem der Ansprüche 1 bis 3, wobei die Stufen b) bis d) ein oder mehrere weitere Male wiederholt werden.

5. Verfahren nach einem der vorangehenden Ansprüche, wobei sich die Startposition (S) in vertikaler Richtung in einem Abstand zwischen 0,5% und 50%, bevorzugt zwischen 0,5% und 20%, besonders bevorzugt zwischen 0,5% und 10%, bezogen auf den Abstand vom Boden des Probengefäßes bis zu der maximalen Füllhöhe des Probengefäßes nach vollständiger Flüssigkeitsabgabe in der jeweiligen Stufe, oberhalb der maximalen Füllhöhe nach vollständiger Flüssigkeitsabgabe in der jeweiligen Stufe befindet.

6. Verfahren nach einem der vorangehenden Ansprüche, wobei sich die Endposition (E) in vertikaler Richtung in einem Abstand zwischen 0,5% und 20%, bevorzugt zwischen 0,5% und 10%, besonders bevorzugt zwischen 0,5% und 5%, bezogen auf den Abstand vom Boden des Probengefäßes bis zu der maximalen Füllhöhe des Probengefäßes nach vollständiger Flüssigkeitsabgabe in der jeweiligen Stufe, oberhalb des Bodens des Probengefäßes befindet.

7. Verfahren nach einem der vorangehenden Ansprüche, wobei mehrere Flüssigkeitsvolumina in der Dosiernadel durch Luftblasen getrennt werden.

8. Verfahren nach einem der vorangehenden Ansprüche, wobei vor Stufe b) die Dosiernadel in vertikaler Richtung aufwärts verfahren wird, bis sich die Abgabeöffnung über der Flüssigkeitsoberfläche befindet, dann eine Trennluftblase angesaugt wird und anschließend die Dosiernadel wieder in die Endposition (E) hineinverfahren wird.

9. Verfahren nach einem der vorangehenden Ansprüche, wobei die Geschwindigkeit, mit der die Dosiernadel in das Probengefäß verfahren wird, zu der Geschwindigkeit der Abgabe der Flüssigkeit oder Flüssigkeiten proportional ist und/oder wobei die Geschwindigkeit, mit der die Dosiernadel in das Probengefäß hineinverfahren wird, gleichbleibend ist.

10. Verfahren nach einem der vorangehenden Ansprüche, wobei die Geschwindigkeit der Abgabe der Flüssigkeit oder Flüssigkeiten aus der Dosiernadel gleichbleibend ist, und/oder wobei die Geschwindigkeit der Abgabe der Flüssigkeit oder Flüssigkeiten aus der Dosiernadel zwischen 0,1 und 2 ml/s, bevorzugt zwischen 0,2 und 1 ml/s, beträgt.

11. Verfahren nach einem der vorangehenden Ansprüche, wobei in Stufe b) 50-100 Vol.% des in dem Probengefäß vorhandenen Flüssigkeitsvolumens, bevorzugt 70-95 Vol.%, besonders bevorzugt 90-95 Vol.-%, aufgesaugt werden.

12. Verfahren nach einem der vorangehenden Ansprüche, wobei die Dosiernadel zum Temperieren der Flüssigkeiten beheizt wird.

13. Verfahren nach einem der vorangehenden Ansprüche, wobei eine Dosiernadel verwendet wird, deren Innendurchmesser an der Abgabeöffnung kleiner als 1 mm ist und bevorzugt zwischen 0,5 und 0,8 mm beträgt, und/oder wobei als Dosiernadel eine Nadel mit einer abgeschrägten Spitze verwendet wird, und/oder wobei als Dosiernadel eine Nadel mit einer geschlossenen Spitze verwendet wird, bei der sich seitlich mehrere Abgabeöffnungen befinden.

14. Verfahren nach einem der vorangehenden Ansprüche, wobei als Probengefäß eine Meßküvette verwendet wird.

15. Verfahren nach einem der vorangehenden Ansprüche, wobei mehrere Dosiernadeln verwendet werden, um mehrere Probengefäße gleichzeitig zu befüllen.

## Claims

1. A method of automatically metering and mixing liquids in a sample vessel by means of a metering needle, comprising the following steps:
a) dispensing a volume of a liquid or a plurality of volumes of a plurality of liquids from a metering needle into a sample vessel, wherein the operation of dispensing the liquid or liquids from the metering needle begins when the dispensing opening of the metering needle is at a starting position (S), the dispensing operation is continued while the metering needle is moved in a vertical direction downwardly in the direction of an end position (E), and the dispensing operation ends when the dispensing opening of the metering needle is at the end position (E),
wherein the starting position is disposed in a vertical direction at a spacing from the bottom of the sample vessel, which corresponds to the maximum filling height of the sample vessel after complete dispensing of the liquid in this step or is above said filling height or at a maximum 10% therebelow, with respect to the spacing from the bottom of the sample vessel to the maximum filling height of the sample vessel after complete dispensing of the liquid in this step, and
wherein the end position (E) is in a vertical direction beneath the starting position (S) and at a spacing relative to the bottom of the sample vessel;
b) sucking up at least a part of the volume of liquid present in the sample vessel by means of the metering needle while the dispensing opening of the metering needle is in the end position (E);
c) moving the metering needle in a vertical direction until the dispensing opening is at the starting position (S); and
d) dispensing the volume of liquid which has been sucked up from the dispensing needle, wherein the dispensing operation begins when the dispensing opening of the metering needle is at the starting position (S), the dispensing operation is continued while the metering needle is moved in a vertical direction downwardly in the direction of the end position (E), and the dispensing operation ends when the dispensing opening of the metering needle is at the end position (E).

2. A method according to claim 1 wherein prior to step a) a volume of a liquid or a plurality of volumes of a plurality of liquids are dispensed from a metering needle into the sample vessel.

3. A method according to claim 1 wherein steps a) to d) are repeated with one or more further liquids.

4. A method according to one of claims 1 to 3 wherein steps b) to d) are repeated one or more further times.

5. A method according to one of the preceding claims wherein the starting position (S) is in a vertical direction at a spacing above the maximum filling height after complete dispensing of the liquid in the respective step, of between 0.5% and 50%, preferably between 0.5% and 20%, particularly preferably between 0.5% and 10%, with respect to the spacing from the bottom of the sample vessel to the maximum filling height of the sample vessel after complete dispensing of the liquid in the respective step.

6. A method according to one of the preceding claims wherein the end position (E) is in a vertical direction at a spacing above the bottom of the sample vessel, of between 0.5% and 20%, preferably between 0.5% and 10%, particularly preferably between 0.5% and 5%, with respect to the spacing from the bottom of the sample vessel to the maximum filling height of the sample vessel after complete dispensing of liquid in the respective step.

7. A method according to one of the preceding claims wherein a plurality of liquid volumes are separated in the metering needle by air bubbles.

8. A method according to one of the preceding claims wherein before step b) the metering needle is displaced in a vertical direction upwardly until the dispensing opening is above the surface of the liquid, then a separation air bubble is sucked in and then the metering needle is moved into the end position (S) again.

9. A method according to one of the preceding claims wherein the speed at which the metering needle is moved into the sample vessel is proportional to the speed of dispensing of the liquid or liquids and/or wherein the speed at which the metering needle is moved into the sample vessel remains constant.

10. A method according to one of the preceding claims wherein the speed of dispensing of the liquid or liquids from the metering needle remains constant and/or wherein the speed of dispensing of the liquid or liquids from the metering needle is between 0.1 and 2 ml/s, preferably between 0.2 and 1 ml/s.

11. A method according to one of the preceding claims wherein in step b) 50 - 100% by volume of the volume of liquid present in the sample vessel, preferably 70 - 95% by volume, particularly preferably 90 - 95% by volume, is sucked up.

12. A method according to one of the preceding claims wherein the metering needle is heated for temperature control of the liquids.

13. A method according to one of the preceding claims wherein a metering needle is used, the inside diameter of which at the dispensing opening is smaller than 1 mm and is preferably between 0.5 and 0.8 mm and/or wherein a needle with a bevelled tip is used as the metering needle and/or wherein a needle with a closed tip, in which a plurality of dispensing openings are laterally provided is used as the metering needle.

14. A method according to one of the preceding claims wherein a measuring cuvette is used as the sample vessel.

15. A method according to one of the preceding claims wherein a plurality of metering needles are used to simultaneously fill a plurality of sample vessels.

## Revendications

1. Procédé de dosage et de mélange automatiques de liquides dans un récipient d'échantillons au moyen d'une aiguille de dosage, ledit procédé comportant les étapes suivantes consistant à :
a) délivrer un volume d'un liquide ou de plusieurs volumes de plusieurs liquides d'une aiguille de dosage dans un récipient d'échantillons, la délivrance du liquide ou des liquides par l'aiguille de dosage commençant lorsque l'ouverture de délivrance de l'aiguille de dosage se trouve dans une position de départ (S), la délivrance étant poursuivie pendant que l'aiguille de délivrance est déplacée verticalement vers le bas en direction d'une position finale (E), et la délivrance se terminant lorsque l'ouverture de délivrance de l'aiguille de dosage se trouve dans la position finale (E),
la position de départ se trouvant verticalement à une distance du fond du récipient d'échantillons qui correspond à la hauteur de remplissage maximale du récipient d'échantillons une fois que la délivrance de liquide est terminée à cette étape, ou au-dessous ou au maximum 10% au-dessous, rapportée à la distance allant du fond du récipient d'échantillons à la hauteur de remplissage maximale du récipient une fois que la délivrance de liquide est terminée à cette étape, et
la position finale (E) se trouvant verticalement au-dessous de la position de départ (S) et à une distance du fond du récipient d'échantillons ;
b) aspirer au moins une partie du volume de liquide présent dans le récipient d'échantillons avec une aiguille de dosage pendant que l'ouverture de délivrance de l'aiguillage de dosage se trouve dans la position finale (E) ;
c) déplacer l'aiguille de dosage verticalement jusqu'à ce que l'ouverture de délivrance se trouve dans la position de départ (S) ;
d) délivrer au moyen de l'aiguille de dosage le volume de liquide aspiré, la délivrance commençant lorsque l'ouverture de délivrance de l'aiguille de dosage se trouve dans la position de départ (S), la délivrance étant poursuivie pendant que l'aiguille de dosage est déplacée verticalement vers le bas en direction de la position finale (E), et la délivrance se terminant lorsque l'ouverture de délivrance de l'aiguille de dosage se trouve dans la position finale (E).

2. Procédé selon la revendication 1, dans lequel avant l'étape a) un volume d'un liquide ou plusieurs volumes de plusieurs liquides étant délivrés par une aiguille de dosage dans le récipient d'échantillons.

3. Procédé selon la revendication 1 ou 2, dans lequel les étapes a) à d) étant répétées avec un ou plusieurs autres liquides.

4. Procédé selon l'une des revendications 1 à 3, dans lequel les étapes b) à d) étant répétées une ou plusieurs autres fois.

5. Procédé selon l'une des revendications précédentes, dans lequel la position de départ (S) se trouve verticalement à une distance comprise entre 0,5% et 50%, de préférence entre 0,5% et 20%, de façon particulièrement préférée entre 0,5% et 10%, rapportée à la distance allant du fond du récipient d'échantillons à la hauteur de remplissage maximale du récipient d'échantillons une fois que la délivrance de liquide est terminée à l'étape correspondante, au-dessus de la hauteur de remplissage maximale une fois que la délivrance de liquide est terminée à l'étape correspondante.

6. Procédé selon l'une des revendications précédentes, dans lequel la position finale (E) se trouve verticalement à une distance comprise entre 0,5% et 20%, de préférence entre 0,5% et 10%, de façon plus particulièrement préférée entre 0,5% et 5%, rapportée à la distance allant du fond du récipient d'échantillons à la hauteur de remplissage maximale du récipient d'échantillons une fois que la délivrance de liquide est terminée à l'étape correspondante, au-dessus du fond du récipient d'échantillons.

7. Procédé selon l'une des revendications précédentes, dans lequel plusieurs volumes de liquide dans l'aiguille de dosage sont séparés par des bulles d'air.

8. Procédé selon l'une des revendications précédentes, dans lequel avant l'étape b) l'aiguille de dosage est déplacée verticalement vers le haut jusqu'à ce que l'ouverture de délivrance se trouve au-dessus de la surface du liquide, puis une bulle d'air de séparation est aspirée et ensuite l'aiguille de dosage est de nouveau ramenée dans la position finale (E).

9. Procédé selon l'une des revendications précédentes, dans lequel la vitesse, à laquelle l'aiguille de dosage est introduite et déplacée dans le récipient d'échantillons, est proportionnelle à la vitesse de la délivrance du liquide ou des liquides et/ou dans lequel la vitesse, à laquelle l'aiguille de dosage est introduite et déplacée dans le récipient d'échantillons, est constante.

10. Procédé selon l'une des revendications précédentes, dans lequel la vitesse de la délivrance du liquide ou des liquides par l'aiguille de dosage est constante, et/ou dans lequel la vitesse de la délivrance du liquide ou des liquides par l'aiguille de dosage est comprise entre 0,1 et 2 ml/s, de préférence entre 0,2 et 1 ml/s.

11. Procédé selon l'une des revendications précédentes, dans lequel à l'étape b) on aspire 50 à 100% en volume du volume de liquide présent dans le récipient d'échantillons, de préférence 70 à 95% en volume, de façon particulièrement préférée 90 à 95%.

12. Procédé selon l'une des revendications précédentes, dans lequel l'aiguille de dosage est chauffée pour équilibrer la température des liquides.

13. Procédé selon l'une des revendications précédentes, dans lequel on utilise une aiguille de dosage dont le diamètre intérieur au niveau de l'ouverture de délivrance est inférieur à 1 mm et est de préférence compris entre 0,5 mm et 0,8 mm, et/ou dans lequel on utilise comme aiguille de dosage une aiguille dotée d'une pointe biseautée, et/ou dans lequel on utilise comme aiguille de dosage une aiguille dotée d'une pointe fermée dans laquelle plusieurs ouvertures de délivrance sont ménagées latéralement.

14. Procédé selon l'une des revendications précédentes, dans lequel on utilise comme récipient d'échantillons une cuve de mesure.

15. Procédé selon l'une des revendications précédentes, dans lequel on utilise plusieurs aiguilles de dosage pour remplir plusieurs récipients d'échantillons simultanément.
